# EUROPEAN PATENT SPECIFICATION

(11) **EP 1 731 334 B1**
(45) Date of publication and mention of the grant of the patent: **04.11.2009**
(21) Application number: 05727717.0
(22) Date of filing: 31.03.2005
(51) Int. Cl.: B60C 25/12

(54) **TIRE ASSEMBLING SYSTEM AND TIRE ASSEMBLING METHOD**
REIFENMONTAGESYSTEM UND REIFENMONTAGEVERFAHREN
SYSTEME D"ASSEMBLAGE DE PNEU ET PROCEDE D"ASSEMBLAGE DE PNEU

(30) Priority: 31.03.2004 JP 2004106733; 30.04.2004 JP 2004136570
(43) Date of publication of application: 13.12.2006
(73) Proprietor: Bridgestone Corporation, Tokyo 104-8340 (JP)
(72) Inventor: Hagiwara, Tadashi, Chuo-ku, Tokyo 1048340 (JP)
(74) Representative: Whalley, Kevin
(86) International application number: PCT/JP2005/006255
(87) International publication number: WO 2005/095128

(56) References cited:
- FR-A1- 2 819 218
- JP-A- 4 356 208
- JP-A- 5 058 122
- JP-A- 10 500 918
- JP-A- 2003 341 323
- JP-A- 2003 517 393
- JP-U- 56 148 905

## Description

### Technical Background

The present invention relates to a tire assembling system for arranging a core body with rubber legs inside a tire and attaching it to a rim, and to a tire assembling method.

### Related Art

The device that currently exists for assembling a pneumatic tire to a wheel is a device conventionally referred to as an automatic tire mounter (hereafter referred to as "mounter").

Nonetheless, this device is solely used for attaching only a tire to a wheel.

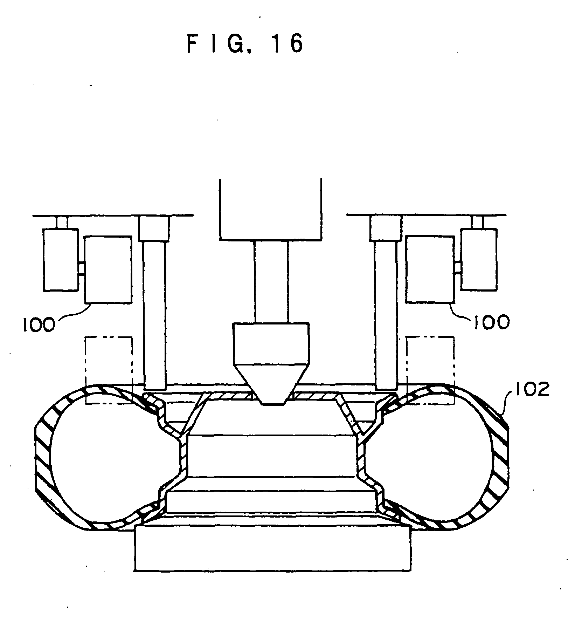

There are roughly two types of this device, one type that has one pressing roller with which the fitting in of the bead of the entire periphery is performed (hereafter, "roller mounter"); and, as shown in FIG 16, a type that has two pressing rollers 100 (hereafter, "two-roller mounter") and each pressing roller 100 respectively fits in one half the periphery of the bead of a tire 102 (e.g., Japanese Patent Application Laid-open No. 5-58122, etc.).

Further, these devices are configured from a combination of bead expanding rollers and pressing rollers that act as the principal components.

In recent years, tires have been known that can stably travel certain distances even if the inner pressure of the tire has decreased (known as "run-flat tires"). There are various types of core-type tires, where an annular core (i.e., support body) is attached to the rim portion within the air chamber of the tire.

Proposals have been made with this core type tire as a device that can be attached to a conventional rim. The core has a configuration provided with rubber legs fixed to the rim so as to abut the inner side portion of the tire bead, and these legs are provided at both ends in the widthwise direction of the annular core main body, which is formed from a metal plate whose cross-sectional form is mountain-shaped (single mountain or double mountain and the like). (Japanese Patent Application Laid-open Nos. 2003-326925 and 2003-341309, etc.)

Meanwhile, filling air to a tire assembly where the tire is fixed to the rim usually involves a general method where air is filled from an air-filling portion (i.e., air-infusion valve) provided at the rim.

In order to complete air filling in a short period of time on the tire assembly line at an automotive manufacturing plant, a bowl-shaped device known as an air dome is placed over the tire. The filling of air is performed using a device that fills high-pressure air in a single burst through a gap that forms between the bead of the tire and the flange.

With this method, the side surface of one side of the tire is pressed evenly and a gap for filling in the air is formed (e.g., refer to Japanese Patent Application Laid-open No. 8-48120).

Proposals have been made with this core type as a device that can be attached to a regular conventional rim. The core type is an annular core (i.e., support body) attached to a portion of the rim in the air chamber of the tire. The configuration of the core is provided with rubber legs fixed to the rim so as to abut the inner side portion of the tire bead, and these legs are provided at both ends in the widthwise direction of the annular core main body, which is formed from a metal plate whose cross-sectional form is mountain-shaped (single mountain or double mountain and the like). (Japanese Patent Application Laid-open Nos. 2003-326925 and 2003-341309, etc.)

| | |
|---|---|
| Patent Publication 1: | Japanese Patent Application Laid-open No. 5-58122, family document of EP-A-0 530 996*.* |
| Patent Publication 2: | Japanese Patent Application Laid-open No. 2003-326925 |
| Patent Publication 3: | Japanese Patent Application Laid-open No. 2003-341309 |
| Patent Publication 4: | Japanese Patent Application Laid-open No. 8-48120 |

### Disclosure of the Invention

### Subject to be Solved by the Invention

Despite the above, conventionally there has not been a machine that can automatically mount a tire having a core body with rubber legs.

When mounting a tire using a conventional device (i.e., an automatic tire mounter), generally, mounting of the bead of the bottom side (i.e., in the direction towards the inner side of the vehicle when fixed to the vehicle) is first performed and next, mounting of the bead of the upper side is performed (i.e., in the direction towards the exterior side of the vehicle when fixed to the vehicle).

It should be noted that when the rigidity of the tire is low, there are cases where the upper and bottom parts are mounted at the same time, however, this method is not used in mounting a tire having a core body.

The reason is that when this kind of device is used as is when trying to mount a tire in which a core has been inserted, the core body gets caught on the rim (flange) during mounting. The bead of the tire and the rubber legs of the core body do not drop into the drop portion of the rim so the tire cannot be mounted.

Also, the tire or the core body may be broken when trying to continuously force the mounting.

Usually, among the processes for mounting only a tire, the entire portion of the sidewall, including the vicinity of the tire bead, is pressed into a position (downwards) deeper than the upper side hump portion of the rim. This is around the starting point of mounting in the case of a one-roller mounter when performing mounting of the bead of the upper side. Generally, mounting is performed in a state where the bead vicinity of the tire has been dropped into the drop portion of the rim.

Also, in the case of a two-roller mounter, there generally is not a mechanism like this. The pressing rollers themselves press the entire sidewall portion, including the vicinity of the tire bead, into a position deeper than the hump portion (upper side) of the front side of the rim. Generally, mounting is performed in a state where the bead vicinity of the tire has been dropped into the drop portion of the rim.

However, when pressing onto a tire with this kind of method in a state where the core body has been inserted into the interior portion of the tire, correct mounting has been hardly performed. This is because that the core body inside the tire being pressed against the inner surface of the sidewall and undergoing plastic deformation (permanent deformation) since the tire side portion is strongly pressed upon (i.e., there is a great amount of pressing force).

When rotating the pressing rollers in the peripheral direction of the tire, sequentially pressing in on the bead of the tire, and in portions where mounting is progressing, as the sidewall portion is pressed upon, the core body is pressed against the inner surface of the sidewall and plastic deformation occurs. In order to suppress the highly rigid core body, a reactive force greater than usual acts upon the pressing rollers, whereby the load increases and mounting cannot be performed. There are also cases of failed mounting where, with portions where mounting was already completed, these cannot be continuously kept in the drop portion of the rim and the bead returns back in the base direction of the rim.

Further, in order to normally complete mounting, it is necessary for the positioning of the tire and core body relative to the rim to be appropriate, however, when there is a core body, there are cases that it is difficult to maintain these positions.

Incidentally, with a safety tire having a core provided with the above-described rubber legs, air can be filled in a conventional manner with an air infusion valve.

Nonetheless, with a method of filling air with an air infusion valve, the amount of air flow is small and it takes time to reach a preset air pressure. Also, this method is not suitable for use at places like mass production facilities such as automobile parts assembly lines.

Further, with an air-filling device such as recited in Japanese Patent Application Laid-open No. 8-48120, in order to make the tire deform and create a gap, the position that is pressed at the side surface portion of the tire is usually the portion in the vicinity of the widest part of the tire or slightly towards the inner side thereof (i.e., toward the side of the rim flange portion).

When trying to fill air with this device into a tire assembly having a core body, the inner surface of the tire bead hits against the core main body metal plate since the core main body is inside. For this reason, it becomes difficult to deform the tire and a gap cannot be formed between the tire and the rim, so air cannot be filled because the air does not flow into the interior of the tire.

In the case of recent side-reinforced type safety tires, the rigidity at the side portion of the tire is extremely high, so even if force is exerted to portions apart from the vicinities of the widest portion of the tire or the rim flange, it becomes difficult to deform the tire and hardly to form the gap for filling in the air.

It should be noted that with this device, the mechanism that presses the side surface of the tire and that is pressed against the tire side surface to maintain the airtight seal are common.

Many tires these days have rim guards attached to them in the flange vicinity in order to prevent scrapes to the rim caused by curbs on the road. Even if the air-filling device is reconfigured to press only on the flange vicinity, the rim guard gets in the way. Accordingly, the contact point by the device with respect to the rim becomes unstable, and it becomes difficult to maintain the air seal and thus difficult to fill the tire with air.

The present invention was made in order to solve the above-described problems. The first objective is the correct mounting of a tire having a core body with rubber legs to a rim without causing plastic deformation of the core body.

Further, the second objective of the present invention is to fill an air with certainty in a short amount of time to a safety tire rim assembly obtained as described above.

### Methods for Solving the Subjects

According to the result of the inventors' repetition of various experiments, when arranging a tire having a core inside thereof to be fixed to a rim, the core has an annular core main body formed from a metal board whose cross-section is a mountain shape and is configured with rubber legs at both ends in the widthwise direction thereof so as to abut the bead inner side of the tire (such as recited in Japanese Patent Application Laid-open Nos. 2003-326925 and 2003-341309), it is possible to mount the assembly just like when there is a tire only. That is, mounting could be performed without causing plastic deformation of the core by designating a particular portion to press against the core.

Namely, when pressing against the side surface of the core (in the axial direction), first, this is completed with little pressing force by pressing the hem part of mountain side rather than the top vicinity of the mountain form part (i.e., the portion that is pressed against is in the vicinity of the rubber legs), that is, pressing is being performed against the portion where the spring constant is low. Secondly, when considering the same amount of pressing force, the core plastic deforms easier when the apex vicinity of the mountain form is pressed against. When pressing against the rubber legs, the stress acting upon the core is suppressed to remain low (since it is pressing against the portion where the spring constant is low) so it is harder for plastic deformation to occur.

The invention recited in claim 1 was made in light of the above-described circumstances, and is a tire attaching system for mounting a tire and a core body to a rim of a wheel, wherein the core is set in the tire and having rubber legs at the end portions in the widthwise direction thereof and arranged so as to abut a bead of the tire. The tire attaching system comprises a wheel retaining part that retains a wheel; a pressing roller that is provided turnably with the rotational axis of the wheel retained by the wheel retaining part as the center, and that presses the outer surface of the bead so that force acts upon only the rubber legs via the bead; a bead-expanding roller that performs guiding and makes the bead and the rubber legs deform so that portions of the bead and the rubber legs are positioned further at the outer side in the diameter direction with respect to a wheel flange; and an immobilizing part for immobilizing a circumferential portion of the outer surface of the bead towards the inner side in the widthwise direction of the tire so that force is exerted only on the rubber legs via the bead.

Next, operation of the tire attaching system recited in claim 1 will be explained.

First, as similar to conventional technology, a tire where a core with rubber legs is arranged in the interior is mounted at an angle relative to a wheel retained at a wheel retaining part (i.e., the rotational axis of the wheel is set in the vertical direction). A part of the bead at the bottom side is dropped into the wheel.

Next, also as similar to conventional technology, the bead of the bottom side is spread open with bead-expanding rollers while the entire bead of the bottom side is gradually steered over the flange of the wheel, whereby the entire bead of the bottom side is dropped in.

Next, in dropping in the bead of the upper side, first, a portion in the circumferential direction of the bead of the upper side is pressed with an immobilizing part towards the inner side in the widthwise direction of the tire and a portion of the upper side bead is dropped in. The immobilizing part presses a circumferential portion of the outer surface of the bead so as to exert force only on the rubber legs through the bead. Accordingly, untenable force does not act upon the main body of the core.

Next, the portion of the dropped in bead of the upper side is made the starting point and while continuously controlling the bead and the rubber legs with the bead-expanding rollers at the position matching the outermost external periphery of the rim flange, the pressing rollers are rotated around the rotational axis of the wheel while pressing against the upper side bead, whereby the entire bead portion of the upper side can be dropped in. The pressing rollers press the bead so as to exert force only on the rubber legs through the bead. Accordingly, untenable force does not act upon the main body of the core.

In this manner, since no untenable force acts upon the core body, there is no plastic deformation of the core body. After both bead portions have been dropped in, the bead and the rubber legs can be arranged at preset positions on the rim by filling in the internal pressure.

According to the invention recited in claim 2, in the tire attaching system of claim 1, the shape of the portion of the immobilizing part that contacts the bead is arc-shaped.

Next, operation of the tire attaching system recited in claim 2 will be explained.

Since the bead portion is circular, it is preferable that in pressing a portion in the circumferential direction of the bead, the shape of the portion of the immobilizing part that contacts the bead to be arc-shaped.

According to the invention recited in claim 3, in the tire attaching system of claim 1 or claim 2, the width of the portion of the immobilizing part in the radial direction of the tire that contacts the bead is set at 10 - 40mm and the length in the circumferential direction is set at 50 - 200mm, and is arranged during immobilization at a distance of 1 - 10mm from the flange of the wheel towards the outer side in the radial direction; and the radius of the pressing roller is set at 50 - 100mm and the width at 10 - 40mm and during pressing, the pressing roller is arranged at a distance of 1 - 10mm from the flange of the wheel at the outer side in the radial direction.

Next, operation of the tire attaching system of the recitations in claim 3 will be explained.

In the immobilizing part, the width of the portion in the tire radial direction that contacts the bead is set at 10 - 40mm and the length in the circumference direction at 50 - 200mm. When immobilizing, the immobilizing part is arranged at a distance of 1 - 10mm towards the exterior side in the radial direction from the wheel flange. In the pressing roller, the radius is set at 50 - 100mm and the width at 10 - 40mm. It is preferable when pressurizing that the pressing roller be arranged at a distance of 1 - 10mm towards the exterior side in the radial direction from the wheel flange.

It should be noted that when the width in the tire diameter direction of the portion of the immobilizing part that contacts the bead is less than 10mm, this is not preferable because force is exerted locally on the tire, so the occurrence of plastic deformation in parts of the bead wire and the core body becomes more likely. When the width exceeds 40mm, this is not preferable because the range of immobilization widens and the force that needs to be exerted on this immobilizing portion increases. Also, the burden on the axle portion of the immobilizing part becomes greater.

When the length in the peripheral direction of the portion of the immobilizing part that contacts the bead is less than 50mm, this is not preferable because force is exerted locally on the tire so the occurrence of plastic deformation in parts of the bead wire and the core body becomes more likely. When the length exceeds 200mm, this is not preferable because the range of immobilization widens and the force that needs to be exerted on this immobilizing portion increases. Also, the burden on the axle portion of the immobilizing part becomes greater.

When the portion of the immobilizing part that contacts the bead is at a distance of less than 1mm towards the exterior side of the radial direction from the wheel flange when immobilizing, this is not preferable because the clearance between the wheel and the portion of the immobilizing part that contacts the bead is not sufficient. Accordingly, there is a tendency for the portion of the immobilizing part that contacts the bead to bump into the wheel flange due to the set position of the wheel or the rattle of machinery. When the distance exceeds 10mm, this is not preferable because the portion of the immobilizing part that contacts the bead presses on the side portion of the core body. Plastic deformation of the core body is thus more likely to occur.

Also, it is not preferable when the radius of the pressing roller is less than 50mm because when mounting the rim and the tire, it becomes difficult to smoothly roll over slight surface irregularities and deformed portions on the tire side when the pressing rollers rotate. When the radius exceeds 100mm, this is not preferable because the pressing rollers themselves become too large and this portion becomes too heavy. Additionally, the pressurizing range of the tire and core body becomes too wide, and the range of deformation influences not only the bead portion but also the side portion of the core body.

It is not preferable when the width of the pressing roller is less than 10mm because the pressing range narrows and the pressure on that portion increases. As a result, this may cause damage to the tire bead when assembled at the rim. It is not preferable that the width exceed 40mm because the pressing range affects up to the side portion of the core body.

Furthermore, when the pressing roller is at a distance of less than 1mm towards the exterior side in the radial direction from the wheel flange, this is not preferable because the clearance between the pressing roller and the wheel flange is not sufficient. When assembling the rim, these components are likely to bump into each other. It is not preferable if the distance exceeds 10mm because the bead portion pressed with the pressing roller generates force to return to its original shape so rim assembly tends to not go well. In addition, this makes the side portion of the core body deform.

According to the invention of claim 4, in any one of the tire attaching systems recited in claims 1 - 3, the immobilizing part has a non-constrained part that does not constrain the tire in the tire diameter direction when the immobilizing part is contacting the tire.

Next, the operation of the tire attaching system recited in claim 4 will be explained.

When the bead portion of the tire is pressed with the immobilizing part, the tire moves in the axial direction and also in the diameter direction (i.e., in a direction away from the center). Accordingly, it is preferable that movement in the diameter direction of the tire not be restrained with the non-constraining part.

According to the invention recited in claim 5, in any one of the tire attaching systems recited in claims 1-4, the system has only one pressing roller.

Next, the operation of the tire attaching system recited in claim 5 will be explained.

By using only one pressing roller, the deformation imparted to the tire when assembled at the rim can be kept to one place, so the tire can be assembled at the rim in a state where plastic deformation of the tire and core body with rubber legs hardly occurs.

According to the invention recited in claim 6, in any one of the tire attaching systems recited in claims 1-4, the system has only two pressing rollers.

Next, the operation of the tire attaching system recited in claim 6 will be explained.

By using two pressing rollers, the amount of movement of each of the rollers can be made approximately half of that when using one pressing roller, and the time for assembling can be shortened.

The invention recited in claim 7 comprises, in any one of the tire attaching systems recited in claims 1 - 6, a safety tire rim assembly retaining part that retains the wheel in which the tire and the core body with the rubber legs are fixed; a pressing part that comes into contact with one side of the outer surface of the tire and presses the side portion of the tire towards the inner side in the widthwise direction of the tire so that the pressing force relative to the core body with rubber legs acts only on the rubber legs via the side portion of the tire, and creates a gap between the bead and the rim as well as between the rubber legs and the rim; and a gas-filling part that comes into contact with the outer side surface of the tire and the rim so as to cover the gap from the outer surface side of the tire and retain an airtight seal and fill gas into the interior of the tire via the gap.

Next, the operation of the tire attaching system recited in claim 7 will be explained.

In order to fill a gas such as air to the safety tire rim assembly, first, the wheel of the assembly is retained at a safety tire rim assembly retaining part.

Next, a pressing part is operated and one outer surface side of the tire is pressed. Due to this, pressing force acts only on the rubber legs of the core body with rubber legs through the side portion of the tire, and the gap is formed between each of the bead and the rim and the rubber leg and the rim.

Then a gas-filling part comes into contact with the outer side surface of the tire and the rim so as to cover the gap from the outer surface side of the tire and retain an airtight seal. A gas is filled into the tire via the gap.

After filling the gas, when the gas-filling part is made to pull away from the tire and the rim, the side portions and the bead are pressed towards the exterior side of the tire due to the inner pressure and the core body, that was elastically deformed, returns to its original shape. The bead and the rubber legs are arranged at preset positions on the rim and the filling of gas is complete.

The invention recited in claim 8 further comprises, in any one of the tire attaching systems recited in claims 1 - 6, a safety tire rim assembly retaining part that retains the wheel to which the tire and the core body with rubber legs are fixed; a pressing part that presses one side of the exterior side surface of the tire and creates a gap between the bead and the rim as well as between the rubber legs and the rim; and a gas-filling part that comes into contact with the outer side surface of the tire and the rim so as to cover the gap from the outer surface side of the tire and retain an airtight seal and fill gas into the interior of the tire via the gap. The portion of the pressing part that comes in contact with the tire has a width in the radial direction of the tire in the range of 2 - 15mm and, during pressing, is arranged at a distance of 1 - 20mm from the flange of the wheel at the exterior side in the radial direction.

Next, the operation of the tire attaching system recited in claim 8 will be explained.

In order to fill a gas such as air to the safety tire rim assembly, first, the wheel of the assembly is retained at a safety tire rim assembly retaining part.

Next, the pressing part is operated and one outer surface side of the tire is pressed. Due to this, a gap is formed between the bead and the rim.

Then a gas-filling part comes into contact with the outer side surface of the tire and the rim so as to cover the gap from the outer surface side of the tire and retain an airtight seal. Air is filled into the tire via the gap.

After filling the gas, when the gas-filling part is made to pull away from the tire and the rim, the side portions and the bead are pressed towards the exterior side of the tire due to the inner pressure and the core body, that was elastically deformed, returns to its original shape. The bead and the rubber legs are arranged at preset positions on the rim and the filling of gas is complete.

With claim 8, the optimum measurements at the time of pressing are limited. When the portion of the pressing part that contacts the tire has a width in the radial direction of the tire of less than 2mm, this is not preferable because localized force is exerted on the tire so plastic deformation of components such as the bead wire is more likely to occur. When it exceeds 15mm, the pressing range widens and the force pressing on the tire increases, so this is not preferable because the burden on the pressing part increases.

When the portion of the pressing part that contacts the tire is at a distance of less than 1mm towards the external side in the radial direction away from the wheel flange at the time of pressing, the clearance of the portion of the pressing part that contacts the tire is not sufficient. This is not preferable because the portion of the pressing part that contacts the bead tends to bump against the wheel flange due to factors such as the positioning on the wheel and the rattling of machinery. When this distance exceeds 20mm, it becomes difficult to convey force to the bead and there are cases where the gap for filling in air cannot be formed.

Further, even with a side-reinforced tire provided with reinforcement at the side portions in order to make run-flat travel possible, it is easy to make this portion deform by pressing on same area and a gap for filling in the gas can be formed with certainty.

According to the invention recited in claim 9, in the tire attaching system according to claim 7 or claim 8, the portion of the pressing part that contacts the tire also serves as the portion of the gas-filling part that comes into contact with the tire.

Next, the operation of the tire attaching system recited in claim 9 will be explained.

With the tire attaching system recited in claim 9, the portion of the pressing part that contacts the tire also functions as the portion of the gas-filling part that contact the tire so when pressing on the side portion of the tire, a seal with the side portion of the tire is simultaneously achieved.

According to the present invention recited in claim 10, in the tire attaching system according to claim 7 or claim 8, the portion of the pressing part that contacts the tire and the portion of the gas-filling part that comes into contact with the tire are each provided independently.

Next, the operation of the tire attaching system recited in claim 10 will be explained.

With the tire attaching system recited in claim 10, the portion of the pressing part that contacts the tire presses the side portion of the tire and makes the side portion of the tire and the rubber legs move toward the inner side of the tire.

Meanwhile, the portion of the gas-filling part that is in contact with the tire contacts a side portion of the tire whose position differs from that of the portion of the pressing part that contacts the tire and thus forms a seal between the gas-filling part and the side portion of the tire.

When pressing on the side surface of the tire so that only the rubber legs are pressed, there are cases where it is necessary to press on protruding portions such as a rim guard. When the portion of the pressing part that contacts the tire also functions as the portion of the gas-filling part that contacts the tire, there are cases where the seal with the protruding portion becomes unstable, even if the pressing on the side surface of the tire is correctly performed.

With the tire attaching system recited in claim 10, the portion of the pressing part that contacts the tire and the portion of the gas-filling part that contacts the tire are each provided independently. Accordingly, the portion of the gas-filling part that contacts the tire can be arranged in a position where it can properly seal, regardless of the pressing part, so the seal between the gas-filling part and the tire can be properly formed.

The invention recited in claim 11 is a tire attaching method for mounting a tire and a core body with rubber legs to a rim of a wheel. The core body is arranged in the tire and provided the rubber legs at the end portions in the widthwise direction thereof, and the rubber legs abut a bead of the tire. The method comprises: a first step of mounting a bead of one side of the tire and one side of rubber legs of the core body at a rim; and a second step of, in a state where a portion of the outer surface of the other bead is immobilized towards the inner side in the widthwise direction of the tire, pressing the other bead in the circumferential direction so that pressing force is exerted only on the rubber leg of the other side while controlling with a bead-expanding roller so that the bead and core body with a rubber leg are positioned along the outermost rim flange periphery. The bead and the rubber leg of the other side are thus sequentially mounted to the rim in this second step.

Next, the tire attaching method recited in claim 11 will be explained.

First, the bead on one side of the tire and one side of rubber legs of the core body are mounted to the rim (first step).

Next, the bead on the other side and the core body with rubber legs on the other side is controlled with the bead-expanding rollers to match in positions along the outermost periphery of the rim flange in a state where a portion of the bead on the outer surface in the circumferential direction is immobilized towards the inner side in the widthwise direction of the tire. The bead and the rubber leg are gradually mounted on the rim in the peripheral direction while the bead is pressed in the circumferential direction so that force is exerted only on the rubber leg (Second step).

Due to this, the tire and the core body with rubber legs are mounted to the rim.

Note that when mounting the bead and rubber legs of the other side, the bead is pressed so that force is imparted through the bead to the rubber legs only and untenable force does not act upon the core body so plastic deformation of the core body does not occur. After both beads have been dropped in, the beads and the rubber legs can be arranged at preset positions on the rim by filling the inner pressure.

The invention recited in claim 12 further comprises, in the tire attaching method of claim 11, a third step where the side portion of the tire is pressed inwards, relative to the core body with a rubber leg, in the widthwise direction of the tire so that the pressing force acts only on the rubber legs via the tire side portion, and creates a gap between the bead and the rim and between the rubber leg and the rim; and a gas-filling step for filling gas into the tire through the gaps after the second step.

Next, the tire attaching method recited in claim 12 will be explained.

In order to fill a gas such as air into the safety tire rim assembly obtained through the first and second steps, one outer side surface of the tire is pressed. At this time, the pressing force on the core body with rubber legs acts only on the rubber legs through the side portion of the tire, and a gap is formed between the bead and the rim as well as the rubber legs and the rim.

Then gas is filled into the tire through the gap.

When pressing on the side portion of the tire is stopped after filling of the gas, the bead and the side portion are pressed towards the outer side due to the inner pressure. The core body that was elastically deformed returns to its original shape, the bead and the rubber legs are arranged at preset positions on the rim, and filling of the gas is thus complete.

### Effects of the Invention

With the tire attaching system and tire attaching method of the present invention as explained above, there is an excellent effect in that the beads and the rubber legs can be arranged at preset positions on the rim with no plastic deformation of the core body.

### Brief Description of the Drawings

FIG 1 is a cross-sectional drawing of a safety tire rim assembly;
FIG 2 is a perspective drawing of a support body;
FIG 3 is a frontal view of a tire attaching machine;
FIG 4 is a side view of a tire attaching machine;
FIG 5 is a partial cross-sectional drawing of the main portions of the tire attaching machine shown in FIG 3;
FIG 6A is a side surface drawing of an immobilizing part;
FIG 6B is a side surface drawing of an immobilizing part according to another embodiment;
FIG 7 is an explanatory drawing showing the way for dropping in the bead of the bottom side;
FIG 8A is an explanatory drawing showing the way for dropping in a portion of the bead of the upper side;
FIG 8B is an explanatory drawing showing the way for dropping in a portion of the bead of the upper side looks;
FIG 9A is an explanatory drawing showing the way for further dropping in the bead of the upper side;
FIG 9B is an explanatory drawing showing the way for further dropping in the bead of the upper sides;
FIG 10 is a frontal drawing of a gas-filling device according to the first embodiment;
FIG 11 is a partial cross-sectional drawing of a pressing component;
FIG 12 is cross-sectional drawing of a gas-filling device and a safety tire rim assembly during air filling;
FIG 13 is cross-sectional drawing of the gas-filling device and the safety tire rim assembly after completion of air filling;
FIG 14 is a cross-sectional drawing of a gas-filling device according to the second embodiment;
FIG 15 is a partial cross-sectional drawing of a pressing component; and
FIG 16 is a drawing showing the main portions of a conventional two-roller mounter.

### Best Modes of Embodiments

Hereafter, an example of embodiments of the present invention will be explained in detail while referring to the drawings.

### [First Embodiment]

The tire attaching system of the present embodiment is provided with a tire attaching machine 150 and a gas-filling device 240 that will be described later.

### (Safety Tire Rim Assembly)

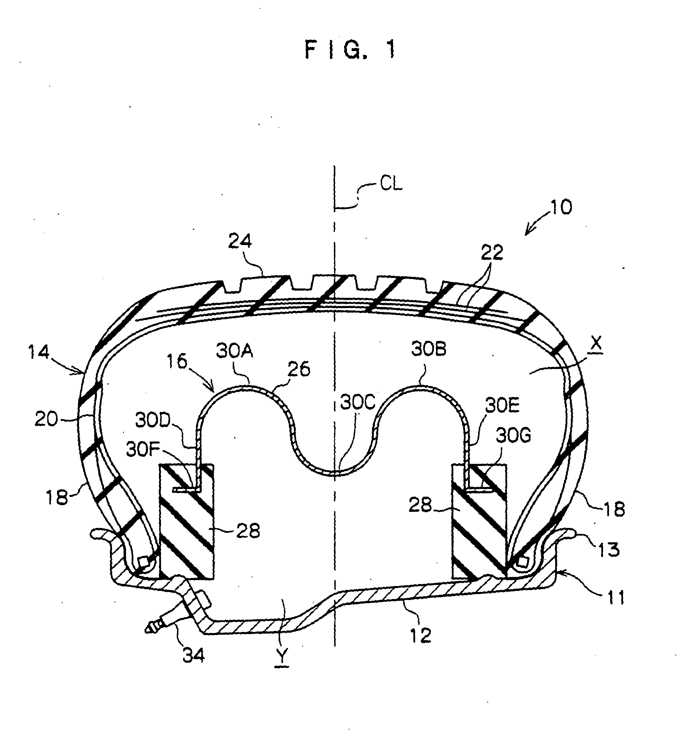

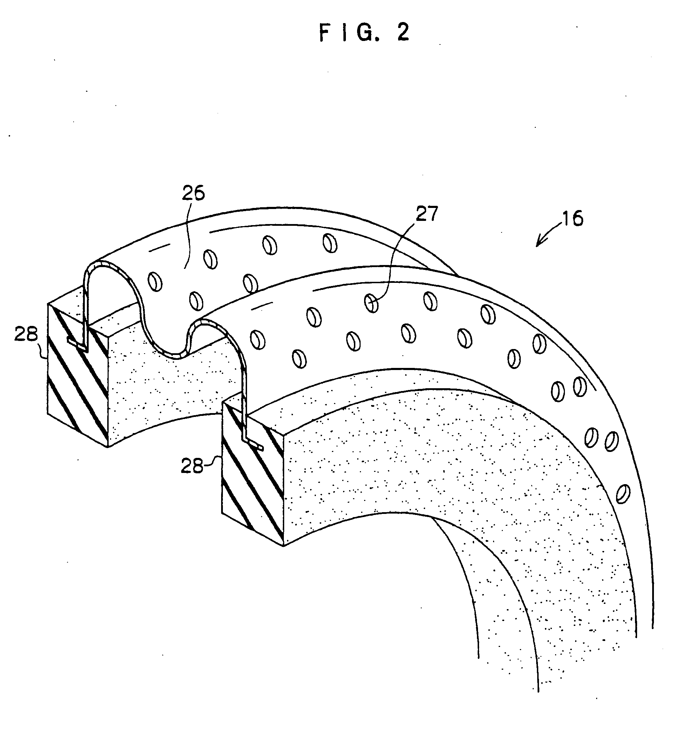

First, a safety tire rim assembly 10 will be explained while referring to FIGS. 1 and 2.

As shown in FIG 1, the safety tire rim assembly 10 of the present embodiment has a pneumatic tire 14 and a support body (i.e., core) 16 attached to a rim wheel 11.

It should be noted that the rim wheel 11 is a device with a regular configuration provided with a rim 12, where the bead 18 of the pneumatic tire 14 is fixed and retained, and a disc 15 that retains the rim 12. Note that an air valve 34 is attached to the rim 12.

The pneumatic tire 14 is a regular radial tire provided with a pair of beads 18, a toroidal carcass 20 that extends across both beads 18, multiple belt layers 22 (two in the present embodiment) positioned on the crown portion of the carcass 20, and treads 24 formed in the upper portions of the belt layers 22.

As shown in FIGS. 1 and 2, the support body 16 arranged in the interior of the pneumatic tire 14 is provided with a ring-shaped support 26 and rubber legs 28, which are vulcanized and adhered at both ends of the support 26.

When attaching the support body 16 to the rim, the legs 28 are attached to the rim 12 at the inner side of the pneumatic tire 14.

The support 26 is formed from one plate, as seen in the cross-sectional shape shown in the drawings, and has convex portions 30A, 30B protruding towards the exterior side in the radial direction, and between these, a concave portion 30C formed so as to protrude towards the interior side in the radial direction; and further, side portions 30D, 30E that support the load are formed at the exterior sides of the convex portions 30A, 30B in the tire widthwise direction.

At the ends of the side portions 30D, 30E at the interior side of the radial direction (i.e., at the end portions on the rim side), flange portions 30F, 30G are formed to extend approximately along the direction of the rotational axis of the tire.

The support 26 is formed from a metal component and in order to lighten it, it is preferable that it be formed from a metal component such as SUS, high-tensile steel, aluminum, and the like.

When the support body 16 as described above is attached to the rim 12 at the interior of the pneumatic tire 14, rubber legs 28 of this support body 16 are fixed to the rim 12.

That is, the space surrounded by the pneumatic tire 14 and the rim 12 is partitioned into two spaces due to the support body 16, space X surrounded by the support body 16 and the tire (i.e., the shielded space at the pneumatic tire 14 side relative to the support 26 and the rubber legs 28, hereafter called "first space"); and space Y surrounded by the support body 16 and the rim 12 (i.e., the shielded space at the rim 12 side relative to the support 26 and the rubber legs 28, hereafter called "second space").

Multiple holes 27 that vent the first space X and the second space Y to each other are formed in the peripheral direction of the support 26 of the support body 16.

### (Tire Attaching Machine)

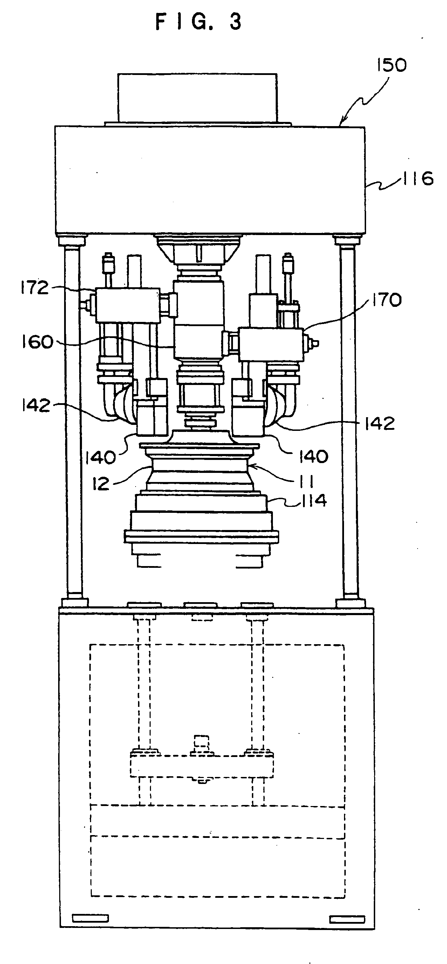

Next, the tire attaching machine 150 for attaching the support body 16 and the pneumatic tire 14 to the rim 12 will be explained while referring to FIGS. 3 - 6.

As shown in FIGS. 3 - 5, the tire attaching machine 150 of the present embodiment is equipped with a table 156 that can elevate along guides 154 with a fluid pressure cylinder 152 that can move up and down.

A tube component 114 that supports one surface of the rim wheel 11 is kept by the table 156.

The tire attaching machine 150 is provided with a shaft 160 arranged almost entirely coaxially with the axial line of the opposite tube component 114.

The shaft 160 is provided with a pin 136. In response to the rising of the tube component 114, the pin 136 fits into an axle containment hole of the rim wheel 11 mounted on the support surface of the tube component 114 and sets the rim wheel 11 in a preset position.

A first fluid pressure cylinder 138 and a second fluid pressure cylinder 143 are also each fixed to a frame 116 of the tire attaching machine 150.

The first fluid pressure cylinder 138 is arranged horizontally. A tread pressing component 139 for pressing the tread of the pneumatic tire 14 towards the inner side of the diameter direction is provided at the output axis faced towards the side with the pneumatic tire 14.

The second fluid pressure cylinder 143 is arranged in the vertical direction, and is provided with a side pressing component 144, at the upper end of the output axle arranged at the upper side, that carries the side portion of the bottom side of the pneumatic tire 14.

Further, a third fluid cylinder 182 that comprises an immobilizing part 180 is fixed in the vertical direction to the frame 116.

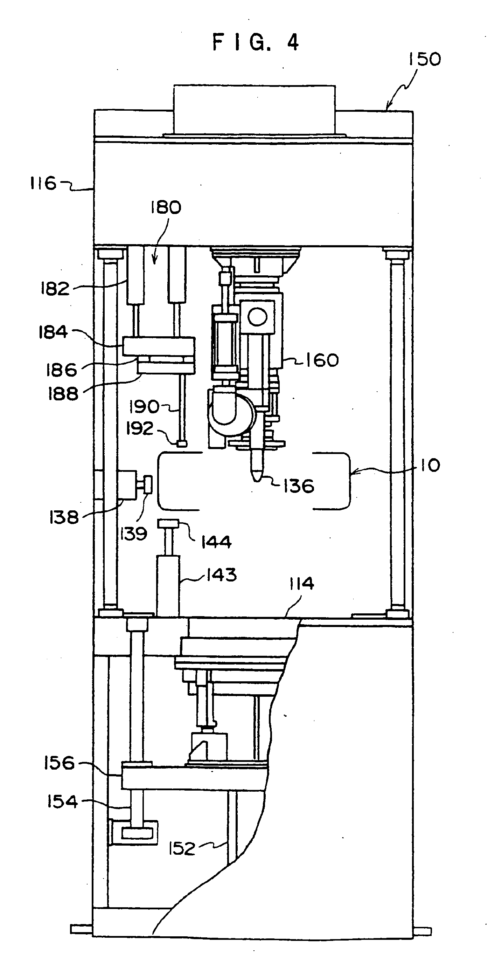

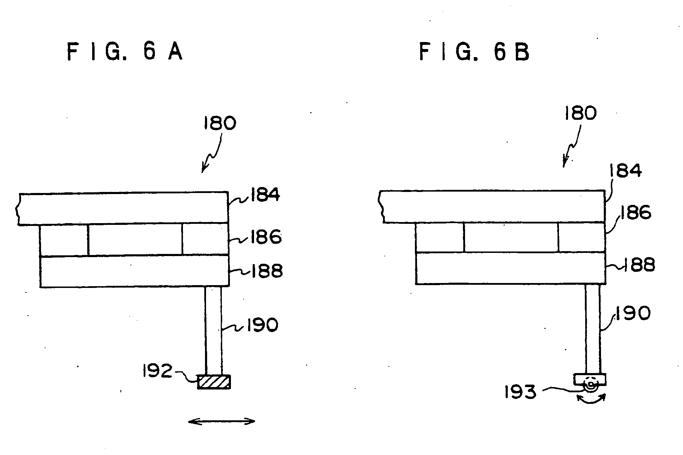

As shown in FIGS. 4 and 6(A), a linear guide rail 184 is attached to the lower end of the output axis arranged at the bottom side of the third fluid cylinder 182.

A slidable linear guide 186 is supported by the rail 184 and a base 188 is attached to the linear guide 186. The base 188 is made to have unrestricted movement at preset measurements in the direction of the wheel diameter.

A shaft 190 that extends downwards is fixed to the undersurface of the base 188. A bead presser 192 is attached to the bottom end of the shaft 190.

When viewed from upperside, the bead presser 192 has a circular arc-shaped form. When the pneumatic tire 14 is for a passenger vehicle, it is preferable that the width of the bead presser 192 in the radial direction of the tire is in the range of 10 - 40mm and that the length in the peripheral direction of the tire be in the range of 50 - 200mm.

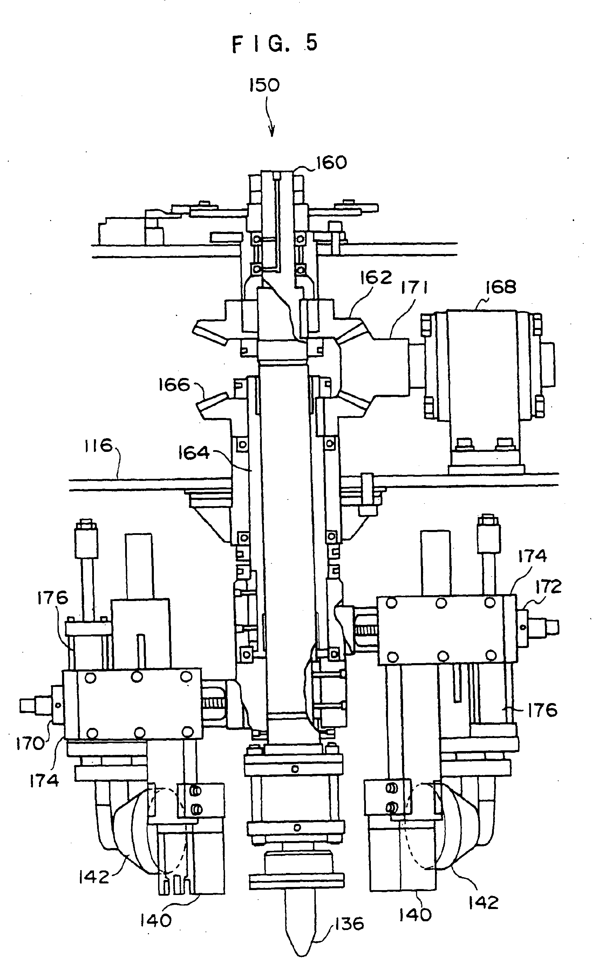

As shown in FIG 5, the shaft 160 is provided with a first bevel gear 162 fixed uniformly to the shaft 160 at the side divided by the pin 136, and with a second bevel gear 166 attached uniformly to a rotatable sleeve 164 attached so as to be able to rotate relative to the shaft 160 .

The first bevel gear 162 and second bevel gear 166 mesh and engage with a third bevel gear 171 fixed to the output axis of a drive motor 168 and make the shaft 160 and sleeve 164 rotate in opposite directions from each other.

Note that the shaft 160 and sleeve 164 are supported so as to be rotatable relative to the housing of the machine via an appropriate axle accommodating part.

Arm components 170, 172 are fixed to the shaft 160 and sleeve 164 so as to be almost entirely perpendicular to their turning axes.

These arm components 170, 172 mutually form opposites and turn in opposite directions to each other in response to movement of the drive motor 168.

A support plate 174 is attached to each arm component so as to be able to deviate in the direction of extension, that is, in the direction perpendicular to the axial line of rotation of the shaft 160. Bead expanding rollers 140 parallel to the axial line of rotation of the shaft 160 are attached to these support plates 174.

Further, a fluid pressure cylinder 176 is attached to each arm component so as to be able to move back and forth parallel to the axial line of rotation of the shaft 160, and a pressing roller 142 is attached to the output axis.

The pressing roller 142 can protrude or retract in the direction the shaft 160 extends (i.e., in the up and down directions) and in that state of protrusion, can push down the bead 18 of the pneumatic tire 14 relative to the rim wheel 11.

When the pneumatic tire 14 is for use in a passenger vehicle, it is preferable that the pressing roller 142 have a radius within the range of 50 - 100mm and that the width of the portion that comes into contact with the pneumatic tire 14 be within the range of 10 - 40mm

Next, the attaching operation procedure using this tire attaching machine 150 will be explained.

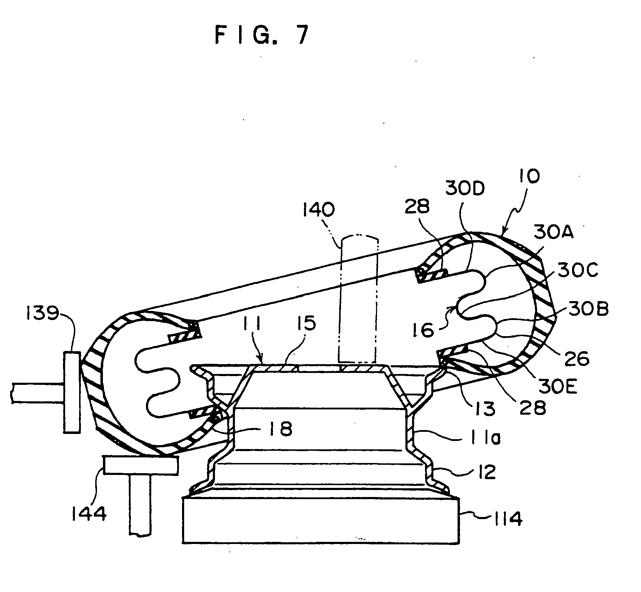

First, as shown typically in FIG 7, the rim wheel 11 to which the pneumatic tire 14 will be attached is supported by the tube component 114 while setting the axial line of the rim in the perpendicular direction

First, the dropping in of the bead 18 of the bottom side will be explained.

The pneumatic tire 14 in which the support body 16 has been inserted is mounted at an angle onto the rim wheel 11 supported by the tube component 114, and a portion of the lower side bead 18 and the rubber leg 28 are dropped into a well 11 a of the rim wheel 11.

At this time, as shown in FIG 7, the side pressing component 144 is made to come into contact with the side portion of the bottom side tilting downwards and push up, while the tread pressing component 139 is made to come into contact with the tread tilting downwards, and then press towards the inner side of the diameter direction of the rim 12 (right side of the drawings). The bead 18 of the bottom side is positioned to the side higher than the hump portion of the bottom side of the rim 12 and then dropped into the well 11a.

Due to this, the rubber leg 28 of the bottom side of the support body 16 can be made so as to not interfere with an upper side flange 13 of the rim 12.

That is, the diameter of the well 11a is smaller than the diameters of the bottom side bead 18 and the rubber legs 28 so by dropping the bead 18 into the well 11a of the rim wheel 11, the distance between the bead portion as well as the rubber legs facing the dropped in bead portion in the diameter direction and the axial line of rotation of the rim wheel 11 can be made a value close to that of the outer diameter of the flange 13 of the rim wheel 11, thus making this fixing operation easier.

Note that the pair of bead expanding rollers 140 is made to turn reciprocally in opposite directions around the axis of the rim from the side of the downward slanting bead (left side in FIG 7) to a position where they faces each other in almost diameter direction (right side in FIG 7). With the spreading of the bead 18 of the bottom side and the rubber leg 28, all of the bead 18 of the bottom side and the rubber leg 28 falls and fits into the rim wheel 11.

This is how dropping in of all of the bottom side bead 18 and the rubber leg 28 is completed.

Next, the dropping in of the bead 18 of the upper side will be explained.

Once the dropping in of the bead 18 of the bottom side has been completed, the bead 18 of the upper side is positioned on and along the flange 13 of the upper side.

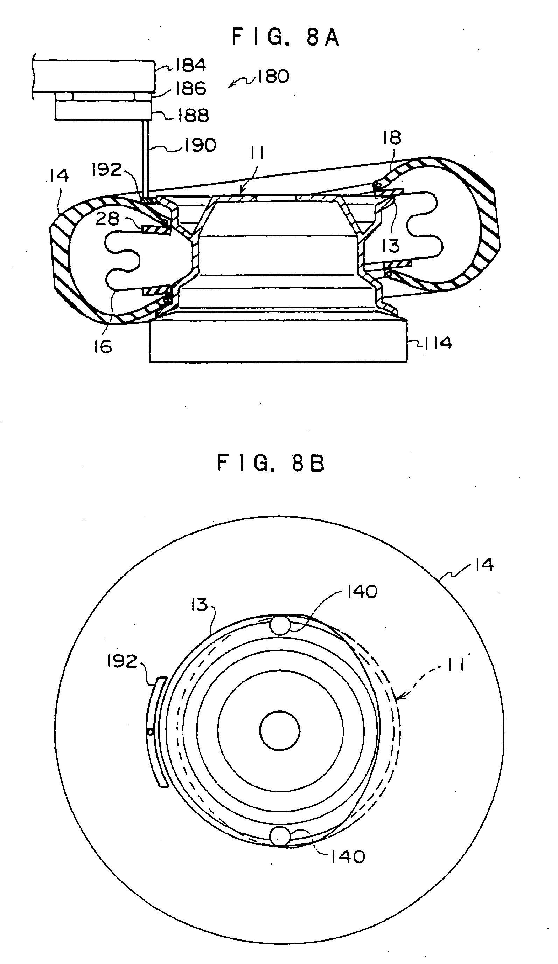

Next, this upper side bead 18 and the rubber leg 28 are spread open towards the exterior of the radial direction with the pair of bead expanding rollers 140 while the bead presser 192 of the immobilizing part 180 is made to drop down. As shown in FIG 8A, when a portion of the upper side bead 18 is pressed down, the pressed down bead portion and its rubber leg on the inner side slip on the periphery edge of the flange 13 and fall into the rim wheel 11.

Here, the bead presser 192 presses a portion of the circumferential direction of the outer surface of the bead so as to exert force through the bead 18 to the rubber leg 28 only. It should be noted that in order to realize this, when the pneumatic tire 14 is for use in a passenger vehicle, it is preferable that the bead presser 192 at the time of immobilization be arranged at a distance of 1 - 10mm towards the exterior side of the radial direction from the flange 13 of the rim wheel 11.

Due to this, the support body 16 can be made to elastically deform with little force and untenable stress is not placed on the support body 16 so there is no plastic deformation of the support body 16.

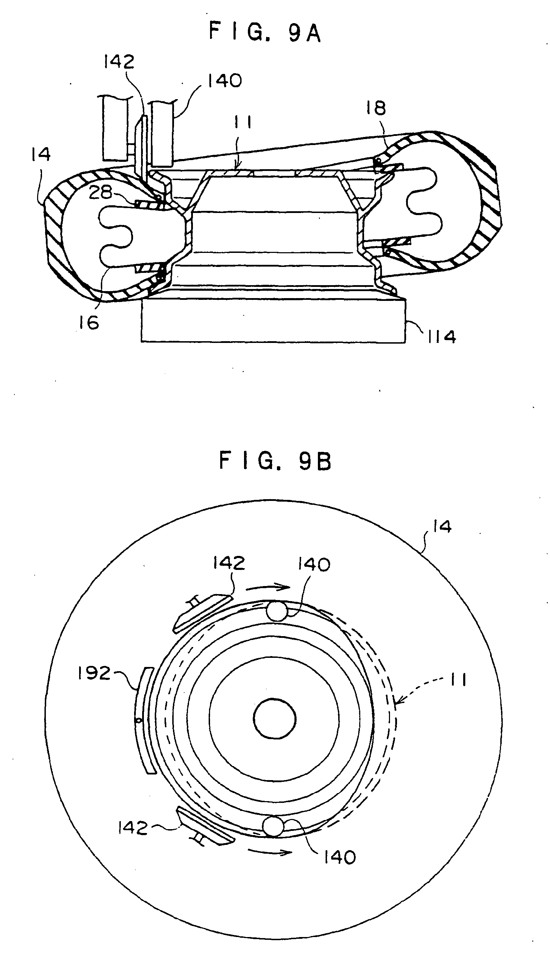

Next, as shown in FIG 9A and 9B, the pair of pressing rollers 142 is set at the bead portion dropped into the rim wheel 11 (only one side shown in FIG 9A) and the location thereof is designated as the starting point of the rollers 142 movement. The pair of pressing rollers 142 are made to turn in opposite directions (directions indicated by arrows in FIG 9B) reciprocally around the rim axis to positions facing each other in almost diameter direction (right side of FIG 9B) while synchronizing with the pair of bead expanding rollers 140 (in contact with the inner periphery of the bead 18, refer to FIG 9B), whereby the upper side bead 18 and the rubber leg 28 are gradually dropped in. When the pair of pressing rollers 142 is close to reaching the other side of the starting point, all of the bead 18 of the upper side and the rubber leg 28 are dropped into the rim wheel 11.

The pressing roller 142 presses on a portion of the outer surface of the bead in the circumferential direction so that force is exerted on only the rubber leg 28 through the bead 18. Note that when the pneumatic tire 14 is for use in a passenger vehicle, in order to realize this it is preferable to arrange the pressing rollers 142 (i.e., the portions that come in contact with the pneumatic tire 14) at the time of pressurization at a distance of 1 - 10mm towards the external side in the radial direction from the flange 13 of the rim wheel 11.

Due to this, the support body 16 can be made to elastically deform with little force and untenable stress is not placed on the support body 16 so there is no plastic deformation of the support body 16.

Note that as mounting with the pressing rollers 142 progresses, the pneumatic tire 14 moves in the diameter direction so when pressing the pneumatic tire 14 with the pressing rollers 142, the side pressing component 144 and the tread pressing component 139 are removed from the pneumatic tire 14. Accordingly, it becomes possible for deviation movement of the pneumatic tire 14 in the diameter direction.

. The pneumatic tire 14 exhibits deviation movement in the diameter direction relative to the rim 12 as explained above. Nonetheless, the base 188 having the bead presser 192 attached thereto is slid in the diameter direction so, due to this as well, movement of deviation in the diameter direction of the pneumatic tire 14 is not obstructed and this sliding is advantageous for mounting.

The gas-filling device 240, which will be described later, is used to supply pressurized air to the interior of the tire, whereby the beads 18 and the rubber legs 28 are arranged at the correct positions on the rim 12.

Note that when the width of the bead presser 192 in the radial direction of the tire is less than 10mm, this is not preferable because local force is exerted on the pneumatic tire 14 so it becomes easier for plastic deformation to occur at portions of the bead wire and the support body 16. When the width exceeds 40mm, this is not preferable because the range of immobilization widens so the force that must be exerted on this bead presser 192 increases. Also, the burden placed on parts such as the axle portion of the immobilizing part 180 for moving the bead presser 192 becomes greater.

When the length of the bead presser 192 in the peripheral direction is less than 50mm, this is not preferable because local force is exerted on the pneumatic tire 14 so it becomes easier for plastic deformation to occur at portions of the bead wire and the support body 16. When the length exceeds 200mm, this is not preferable because the range of immobilization widens so the force that must be exerted on this bead presser 192 increases. Also, the burden placed on parts such as the axle portion of the immobilizing part 180 for moving the bead presser 192 becomes greater.

Furthermore, when the bead presser 192 is at a distance of less than 1mm towards the outer side of the radial direction from the flange 13 of the rim wheel 11 during immobilization, the clearance between the rim wheel 11 and the bead presser 192 is insufficient. This is not preferable because the bead presser 192 may bump into the flange 13 of the rim wheel 11 due to factors such as the set position of the rim wheel 11 or the rattle of machinery. When the distance is over 10mm, this is not preferable because the bead presser 192 presses the side portion of the support body 16. It thus becomes easier for plastic deformation of the support body 16 to occur.

Also, it is not preferable when the radius of the pressing roller 142 is less than 50mm because when mounting the rim 12 and the pneumatic tire 14, the pressing roller 142 may not smoothly roll over slight surface irregularities and deformed portions on the tire side when the pressing rollers 142 rotate. This deteriorates the rim assembling efficiency. When the radius exceeds 100mm, this is not preferable because the pressing rollers 142 themselves become too large and this portion becomes too heavy. Additionally, the pressurizing range of the pneumatic tire 14 and support body 16 becomes too wide, and the range of deformation widens to influence not only the bead 18 but also the side portion of the support body 16.

When the width of the portion of the pressing roller 142 that contacts the pneumatic tire 14 is less than 10mm, the pressing range narrows and the pressure at this portion rises. As a result, this is not preferable because damage to the tire bead is likely to occur when assembling the rim. When the width exceeds 40mm, this is not preferable because the pressing range extends to the side portion of the support body 16.

Furthermore, when the pressing roller 142 is positioned at a distance of less than 1mm towards the outer side in the radial direction from the flange 13 of the rim wheel 11 during pressing, the clearance between the pressing roller 142 and the flange 13 of the rim wheel 11 is not sufficient, and this is not preferable because these components bump into each other during rim assembly. When the distance exceeds 10mm, the bead 18 pressed with the pressing roller 142 generates force to return it to its original state. This is not preferable because rim assembly does not go well and additionally, this deforms the side portion of the support body 16.

It should be noted that with the tire attaching machine 150 of the above-described embodiment, the base 188 having the bead presser 192 attached thereto is made slidable in the diameter direction so as to not obstruct movement of the pneumatic tire 14 in the diameter direction. However, as shown in FIG 6B, a roller 193 that comes into contact with the side surface of the tire and rotates can also be provided at the bead presser 192.

Also, with the tire attaching machine 150 of the above-described embodiment, two pressing rollers 142 are provided, however, one pressing roller 142 can be provided as well.

Further, one or two bead expanding rollers 140 can be provided per pressing roller 142.

### (Gas-filling Device)

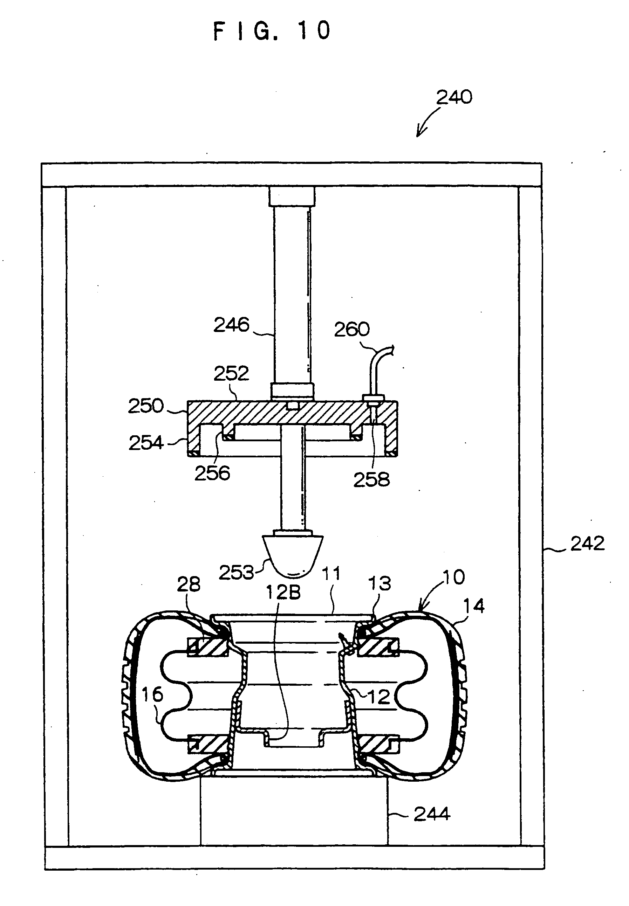

Next, the gas-filling device 240 that fills gas into the safety tire rim assembly 10 will be explained while referring to FIGS. 10-13.

As shown in FIG 10, the gas-filling device 240 is provided with a mounting disc 244 that horizontally supports the safety tire rim assembly 10 at the bottom portion of a frame 242.

A hydraulic cylinder 246 is attached in the vertical direction to the undersurface of the upper portion of the frame 242.

A pressing component 250 made of metal is attached to the piston rod of the hydraulic cylinder 246.

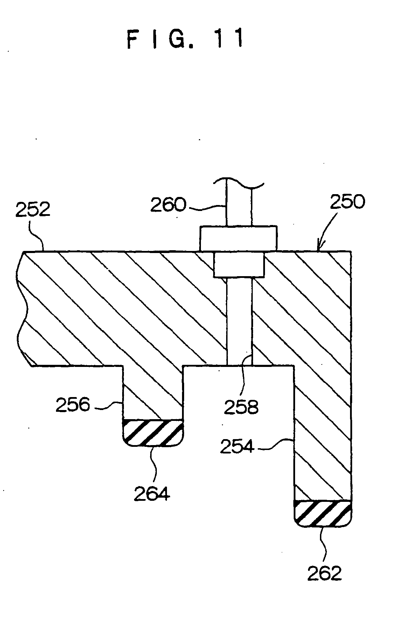

As shown in FIGS. 10 and 11, the pressing component 250 is provided with a circular base portion 252, and a taper-shaped guide 253 that performs centering of the rim 12 on the center axis is attached to the undersurface of the base portion 252. A ring-shaped tire presser 254 is uniformly formed along the outer periphery side and a ring-shaped seal 256 is uniformly formed at the inner side of the tire presser 254.

Note that the axis center of the guide 253, the axis center of the tire presser 254, and the axis center of the seal 256 are all lined up.

A vent hole 258 is also formed in the base portion 252 between the tire presser 254 and the seal 256. An air hose 260 connected to a compressor not shown in the drawings is connected at the end on the upper surface side of the base of the vent hole 258.

As shown in FIG 11, a rubber ring 262 is fixed to the bottom end of the tire presser 254 and a rubber ring 264 is fixed to the bottom end of the seal 256. Note that a plastic ring may be fixed to the tire presser instead of the rubber ring 262.

When the size of the pneumatic tire 14 is 255/65R17, the gas-filling device 240 of the present embodiment has the tire presser 254 set with a width (in the diameter direction) of 5mm and an inner diameter of 492mm. Note that the interval between the flange 13 of the rim 12 and the tire presser 254 becomes 10mm.

Also, the portion of the seal 256 that contacts the flange 13 has a width of 5mm towards the inner side in the diameter direction from the outer end in the diameter direction of the flange 13.

### (Process for Filling Air to the Safety Tire Rim Assembly 10)

Next, the process for filling air to the safety tire rim assembly 10 using this gas-filling device 240 will be explained.

First, as shown in FIG 10, the safety tire rim assembly 10 is made horizontal and loaded onto the mounting disc 244.

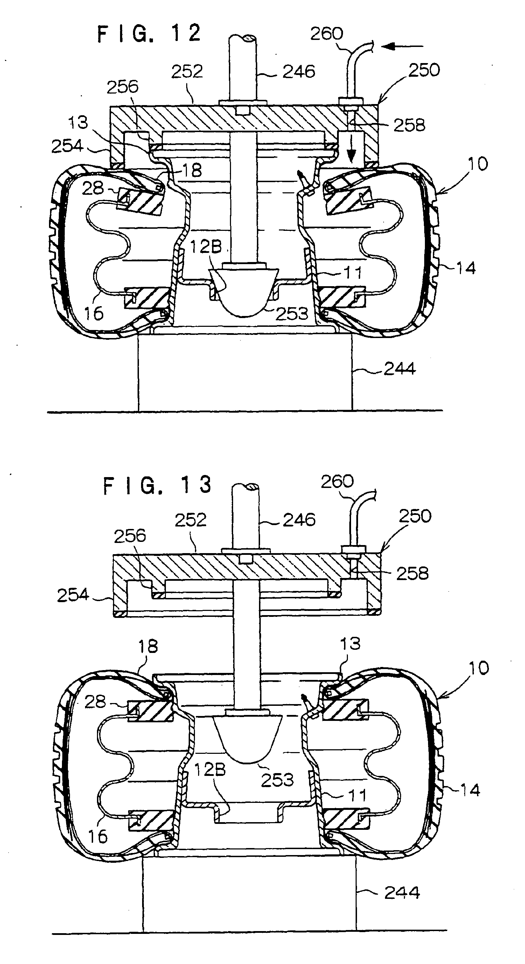

Next, the pressing component 250 is lowered with the hydraulic cylinder 246 and, as shown in FIG 12, the seal 256 is made to adhere closely to the flange 13 of the rim 12.

At this time, the guide 253 is inserted into a hole 12B in the center of the rim 12 and the axis center of the pressing component 250 and the axis center of the rim 12 line up.

The tire presser 254 in the axial direction are taller than the seal 256 so it adheres closely with the side of the pneumatic tire 14 and presses the side portion towards the inner side.

The pneumatic tire 14 makes the side portion at the inner side deform while the rubber leg 28 arranged at the inner side is pressed towards the inner side. A gap is formed between the bead 18 and the rim 12 and a gap is formed between the rubber leg 28 and the rim 12 as well

When high-pressure air is supplied in this state to the vent hole 258 from an air compressor, the high-pressure air is infused into the space surrounded by the rim 12 and support body 16 through a space surrounded by the base portion 252, tire presser 254, seal 256, rim 12 and pneumatic tire 14, the gap between the rim 12 and the bead 18, and the gap between the rim 12 and the rubber leg 28, and further the air is filled into the space surrounded by the support body 16 and pneumatic tire 14 via the holes 27.

After that, the pressing component 250 is raised with the hydraulic cylinder 246 and, as shown in FIG 13, when the pressing component 250 is distanced from the safety tire rim assembly 10, the pressed side portion and the bead 18 are pressed towards the exterior side of the tire due to the inner pressure. The support body 16 that was elastically deformed returns to its original form, the bead 18 and the rubber leg 28 are arranged at preset positions on the rim 12, and the filling of air is complete.

With the present embodiment, air was filled to the safety tire rim assembly 10 having the pneumatic tire 14 and support body 16 attached to the rim 12. Nonetheless, it is of course possible to use the gas-filling device 240 to fill air when using a side-reinforced type pneumatic tire that does not use the support body 16 (e.g., refer to Japanese Patent Application Laid-open Nos. 2003-191725 and 11-348512) or even when using a regular pneumatic tire.

Note that when using a side-reinforced type pneumatic safety tire, it is preferable that the portion of the tire presser 254 that contacts the pneumatic tire have a width within the range of 2 - 15mm in the radial direction of the tire and that at the time of pressing, it be set at a distance of 1 - 20mm from the flange 13 towards the outer side in the radial direction.

Also, in the present embodiment, centering was performed using the guide 253, however, a bolt inserted into an attachment hole on the rim 12 can be attached to the mounting disc 244. This bolt can be used to position (i.e., center) the rim 12 on the mounting disc 244.

### [Second Embodiment]

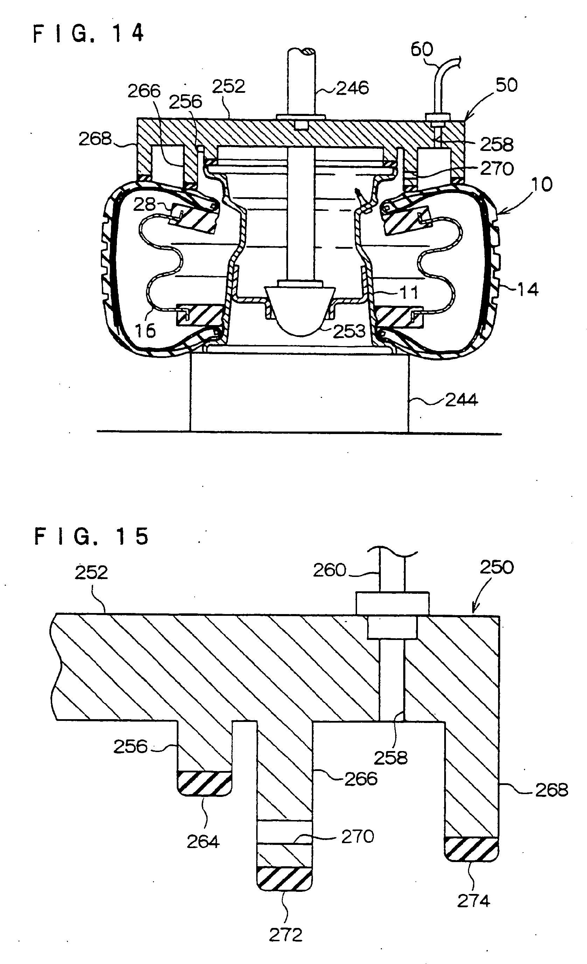

Next, the gas-filling device 240 according to the second embodiment will be explained while referring to FIGS. 14 and 15. It should be noted that components that are the same as in the first embodiment have been given the same numbers and explanations thereon have been omitted.

As shown in FIGS. 14 and 15, the pressing component 250 of the present embodiment is provided with a first tire presser 266 and second tire presser 268 at the outer side in the diameter direction of the seal 256.

A rubber ring 272 is fixed to the bottom end of the first tire presser 266 and a rubber ring 274 is fixed to the bottom end of the second tire presser 268.

Note that the rubber ring 272 and the rubber ring 274 can also be plastic rings.

With the present embodiment, the first tire presser 266 has the main role of pressing the side portion towards the inner side, and the second tire presser 268 seals the pressing component 250 and the pneumatic tire 14 so that internal pressure does not escape.

The vent hole 258 is formed in the base portion 252 between the first tire presser 266 and the second tire presser 268, and a vent hole 270 that passes through the first tire presser 266 in the diameter direction is formed.

As shown in FIG 14, with the present embodiment, when the seal 256 is closely adhered to the flange 13 of the rim 12, the first tire presser 266 presses side surface of the pneumatic tire 14 and forms a gap to be used for filling in air. The second tire presser 268 adheres to the side surface of the pneumatic tire 14 so that the inner pressure does not escape.

Note that in order to raise sealability, it is preferable that the second tire presser 268 be made to contact a portion on a smooth side surface of the pneumatic tire 14 with few bumps and indentations.

### (Tests)

In order to confirm the effects of the present invention, a conventional gas-filling device and the gas-filling device of the embodiment (the gas-filling device of the first embodiment) were prepared, and air was filled into a safety tire rim assembly.

Note that the pneumatic tire used was a tire for a passenger vehicle with a size of 225/65R17 where a support body (i.e., core) with a diameter of 17 inches and a width of 7.5 inches was used. Also, the pressure of the air filled therein was set at 220kPa.

The conventional gas-filling device is configured almost the same as the gas-filling device of the embodiment, however, the width of the tire presser 254 is set at 10mm and the interval between the tire presser 254 and the flange 13 is set at 25mm.

The results of the test were that with the conventional gas-filling device, a gap with the rim for filling in the air could not be formed when pressing the tire side since the support 26 of the support body (core) 16 inside was pressed, and air could not be filled into the interior of the safety tire rim assembly.

On the other hand, with the gas-filling device of the embodiment, a gap could be formed between the pneumatic tire and the rim as well as between the rubber leg and the rim when pressing on the side portion of the tire, and air could be filled into the interior of the safety tire rim assembly in a short amount of time.

### Industrial Applicability

As described above, the tire attaching system according to the present invention is ideal for arranging a core body with rubber legs inside a tire and attaching it to the rim, and thus obtaining a safety tire rim assembly.

### Explanations of Reference Numerals

- 10:: SAFETY TIRE RIM ASSEMBLY
- 11:: RIM WHEEL
- 12:: RIM
- 14:: PNEUMATIC TIRE
- 16:: SUPPORT BODY
- 114:: TUBE COMPONENT (WHEEL RETAINING PART)
- 140:: BEAD EXPANDING ROLLER
- 142:: PRESSING ROLLER
- 150:: TIRE ATTACHING MACHINE
- 180:: IMMOBILIZING PART
- 184:: RAIL (UNCONSTRAINED PART)
- 186:: LINEAR GUIDE (UNCONSTRAINED PART)
- 240:: GAS-FILLING DEVICE
- 244:: MOUNTING DISC (SAFETY TIRE RIM ASSEMBLY RETAINING PART)

## Claims

1. A tire attaching system for mounting a tire and a core body to a rim of a wheel wherein the core body is set in the tire and is provided with rubber legs at the end portions in the widthwise direction thereof and arranged so as to abut a bead of the tire, the tire attaching system comprising:
a wheel retaining part that retains a wheel;
a pressing roller that is provided turnably with the rotational axis of the wheel retained by the wheel retaining part as the center, and that presses the outer surface of the bead so that force acts upon only the rubber legs via the bead;
a bead-expanding roller that performs guiding and makes the bead and the rubber legs deform so that portions of the bead and the rubber legs are positioned at the outer side in the diameter direction with respect to a wheel flange; **characterized by**
an immobilizing part for immobilizing a circumferential portion of the outer surface of the bead towards the inner side in the widthwise direction of the tire so that force is exerted only on the rubber legs via the bead.

2. The tire attaching system of claim 1, wherein the shape of the portion of the immobilizing part that contacts the bead is arc-shaped.

3. The tire attaching system of claim 1 or claim 2, wherein:
the width of the portion of the immobilizing part in the radial direction of the tire that contacts the bead is set at 10 - 40mm and the length in the circumferential direction is set at 50 - 200mm, and is arranged during immobilization at a distance of 1 - 10mm from the flange of the wheel towards the outer side in the tire radial direction; and
the radius of the pressing roller is set at 50 - 100mm and the width at 10 - 40mm and during pressing, the pressing roller is arranged at a distance of 1 - 10mm from the flange of the wheel at the outer side in the tire radial direction.

4. The tire attaching system according to any one of claims 1-3, wherein the immobilizing part has a non-constraining part that does not constrain the tire in the tire diameter direction when the immobilizing part is contacting the tire.

5. The tire attaching system according to any one of claims 1 - 4, wherein the system has only one pressing roller.

6. The tire attaching system according to any one of claims 1 - 4, wherein the system has only two pressing rollers.

7. The tire attaching system according to any one of claims 1 - 6 further comprising:
a safety tire rim assembly retaining part that retains the tire and the wheel in which the core body with the rubber legs is fixed;
a pressing part that comes into contact with one side of the outer surface of the tire and presses the side portion of the tire towards the inner side in the widthwise direction of the tire so that the pressing force relative to the core body with rubber legs acts only on the rubber legs via the side portion of the tire, and creates a gap between the bead and the rim as well as between the rubber legs and the rim; and
a gas-filling part that comes into contact with the outer side surface of the tire and the rim so as to cover the gap from the outer surface side of the tire and retain an airtight seal and fill gas into the interior of the tire via the gap. .

8. The tire attaching system according to any one of claims 1 - 6 further comprising:
a safety tire rim assembly retaining part that retains the wheel to which the tire and the core body with rubber legs is fixed;
a pressing part that presses one side of the exterior side surface of the tire and creates a gap between the bead and the rim as well as between the rubber legs and the rim; and
a gas-filling part that comes into contact with the outer side surface of the tire and the rim so as to cover the gap from the outer surface side of the tire and retain an airtight seal and fill gas into the interior of the tire via the gaps,
wherein a portion of the pressing part that comes in contact with the tire has a width in the radial direction of the tire in the range of 2 - 15mm and, during pressing, is arranged at a distance of 1 - 20mm from the flange of the wheel at the exterior side in the tire radial direction.

9. The tire attaching system according to claim 7 or claim 8, wherein the portion of the pressing part that contacts the tire also serves as the portion of the gas-filling part that comes into contact with the tire.

10. The tire attaching system according to claim 7 or claim 8, wherein the portion of the pressing part that contacts the tire and the portion of the gas-filling part that comes into contact with the tire are each provided independently.

11. A tire attaching method for mounting a tire and a core body to a rim of a wheel wherein the core body is set in the tire and is provided with rubber legs at the end portions in the widthwise direction thereof and arranged so as to abut a bead of the tire, the method comprising:
a first step of mounting on the rim a bead of one side of the tire and a rubber leg of one side of rubber legs of the core body; **characterized by**
a second step of, in a state where a circumferential portion of the outer surface of the bead of the other side is immobilized towards the inner side in the widthwise direction of the tire, pressing the bead of the other side in the circumferential direction so that pressing force is exerted only on the rubber leg of the other side and so that the bead and the rubber leg of the other side are sequentially mounted at the rim while controlling with a bead-expanding roller so that the bead and the core body with a rubber leg are positioned along the outermost rim flange periphery.

12. The tire attaching method of claim 11, wherein the method further comprises:
a third step where the side portion of the tire is pressed inwards, relative to the core body with a rubber leg, in the widthwise direction of the tire so that the pressing force acts only on the rubber legs via the tire side portion, and creates a gap between the bead and the rim as well as between the rubber leg and the rim; and
a gas-filling step for filling gas into the tire through the gap.

## Patentansprüche

1. Reifenbefestigungssystem zur Befestigung eines Reifens und eines Kernkörpers auf einer Felge eines Rades, bei welchem der Kernkörper in den Reifen gesetzt ist und mit Kunststoffbeinen an den Endabschnitten in Breitenrichtung davon bereitgestellt ist, und so angeordnet, dass er an einen Wulst des Reifens anstößt, wobei das Reifenbefestigungssystem umfasst:
ein Reifenhalteteil, in welchem ein Rad festgehalten ist;
eine Anpressrolle, welche mit der Rotationsachse des Rades drehbar bereitgestellt ist, welches durch das Reifenhalteteil als Zentrum gehalten wird, und welche die äußere Oberfläche des Wulstes so presst, dass Kraft nur über den Wulst auf die Kunststoffbeine wirkt;
eine Wulstexpandierrolle, die eine Führung durchführt und den Wulst und die Kunststoffbeine so deformiert, dass Abschnitte des Wulstes und der Kunststoffbeine an der Außenseite in der Durchmesserrichtung in Bezug auf einen Reifenflansch angeordnet sind; **gekennzeichnet durch**
ein immobilisierendes Teil zur Immobilisierung eines Umfangsabschnitts der äußeren Oberfläche des Wulstes in Richtung der Innenseite in Reifenbreitenrichtung, so dass Kraft nur über den Wulst auf die Kunststoffbeine ausgeübt wird.

2. Reifenbefestigungssystem nach Anspruch 1, bei welchem die Form des Abschnitts des immobilisierenden Teils bogenförmig ist, welcher den Wulst kontaktiert.

3. Reifenbefestigungssystem nach Anspruch 1 oder 2, bei welchem:
die Breite des Abschnitts des immobilisierenden Teils in der radialen Richtung des Reifens, welcher den Wulst kontaktiert, auf 10-40 mm eingestellt ist, und die Länge in der Umfangsrichtung auf 50-200 mm eingestellt ist, und während der Immobilisierung auf einem Abstand von 1-10 mm von dem Flansch des Rades in Richtung der Außenseite in der Reifenradialrichtung angeordnet ist; und
der Radius der Anpressrolle auf 50-100 mm und die Breite auf 10-40 mm eingestellt ist, und während des Anpressens die Anpressrolle mit einem Abstand von 1-10 mm von dem Flansch des Rades auf der Außenseite in der Reifenradialrichtung angeordnet ist.

4. Reifenbefestigungssystem nach einem der Ansprüche 1 bis 3, bei welchem das immobilisierende Teil ein nicht einschränkendes Teil aufweist, welches den Reifen in der Reifendurchmesserrichtung nicht einschränkt, wenn das immobilisierende Teil den Reifen kontaktiert.

5. Reifenbefestigungssystem nach irgendeinem der Ansprüche 1 bis 4, bei welchem das System nur eine Anpressrolle aufweist.

6. Reifenbefestigungssystem nach irgendeinem der Ansprüche 1 bis 4, bei welchem das System nur zwei Anpressrollen aufweist.

7. Reifenbefestigungssystem nach irgendeinem der Ansprüche 1 bis 6, weiterhin umfassend:
ein Sicherheitsreifen-Felgenmontage-Halteteil, welches den Reifen und das Rad, in welchem der Kernkörper mit den Kunststoffbeinen fixiert ist, hält;
ein pressendes Teil, welches mit einer Seite der äußeren Oberfläche des Reifens in Kontakt kommt, und den Seitenabschnitt des Reifens in Richtung der inneren Seite in Reifenbreitenrichtung drückt, so dass die Presskraft relativ zu dem Kernkörper mit den Kunststoffbeinen nur über den Seitenabschnitt des Reifens auf die Kunststoffbeine wirkt, und einen Spalt zwischen dem Wulst und der Felge ebenso wie zwischen den Kunststoffbeinen und der Felge erzeugt; und
ein Gasfüllteil, welches mit der äußeren Seitenoberfläche des Reifens und der Felge in Kontakt kommt, um den Spalt von der äußeren Oberflächenseite des Reifens abzudecken und eine luftdichte Dichtung zu halten, und um Gas in das Innere des Reifens über den Spalt zu füllen.

8. Reifenbefestigungssystem nach irgendeinem der Ansprüche 1 bis 6, weiterhin umfassend:
ein Sicherheitsreifen-Felgenmontage-Halteteil, welches das Rad hält, an welchem der Reifen und der Kernkörper mit Kunststoffbeinen fixiert ist;
ein pressendes Teil, welches eine Seite der äußeren Seitenoberfläche des Reifens presst, und einen Spalt zwischen dem Wulst und der Felge ebenso wie zwischen den Kunststoffbeinen und der Felge erzeugt; und
ein Gasfüllteil, welches mit der äußeren Seitenoberfläche des Reifens und der Felge in Kontakt kommt, um den Spalt von der äußeren Oberflächenseite des Reifens abzudecken und um eine luftdichte Dichtung zu halten und um Gas in das Innere des Reifens über die Spalten zu füllen,
wobei ein Abschnitt des pressenden Teils, welches in Kontakt mit dem Reifen kommt, eine Breite in der Radialrichtung des Reifens im Bereich von 2-15 mm aufweist, und während des Pressens mit einem Abstand von 1-20 mm von dem Flansch des Rades an der äußeren Seite in der Reifenradialrichtung angeordnet ist.

9. Reifenbefestigungssystem nach Anspruch 7 oder Anspruch 8, bei welchem der Abschnitt des pressenden Teils, welches mit dem Reifen in Kontakt kommt, auch als der Abschnitt des Gasfüllteils dient, der mit dem Reifen in Kontakt kommt.

10. Reifenbefestigungssystem nach Anspruch 7 oder Anspruch 8, bei welchem der Abschnitt des pressenden Teils, welches mit dem Reifen in Kontakt kommt, und der Abschnitt des Gasfüllteils, welches mit dem Reifen in Kontakt kommt, jeweils unabhängig voneinander bereitgestellt sind.

11. Reifenbefestigungsverfahren zur Befestigung eines Reifens und eines Kernkörpers einer Felge eines Rades, bei welchem der Kernkörper in den Reifen gesetzt ist, und mit Kunststoffbeinen an den Endabschnitten in der Breitenrichtung davon ausgestattet ist, und so angeordnet, um an einem Wulst des Reifens anzugrenzen, wobei das Verfahren umfasst:
einen ersten Schritt des Befestigens eines Wulstes auf einer Seite des Reifens und eines Gummibeins auf einer Seite der Kunststoffbeine des Kernkörpers auf der Felge; **gekennzeichnet durch**
einen zweiten Schritt des Pressens des Wulstes der anderen Seite in der Umfangsrichtung in einem Zustand, wenn ein Umfangsabschnitt der äußeren Oberfläche des Wulstes der anderen Seite in Richtung der inneren Seite in der Breitenrichtung des Reifens immobilisiert ist, so dass eine Druckkraft nur auf das Gummibein auf der anderen Seite ausgeübt wird, so dass der Wulst und das Gummibein der anderen Seite nacheinander an der Felge befestigt werden, während des Steuerns mit einer Wulst expandierenden Rolle, so dass der Wulst und der Kernkörper mit einem Gummibein entlang der äußersten Felgenflanschperipherie positioniert sind.

12. Reifenbefestigungsverfahren nach Anspruch 11, bei welchem das Verfahren weiterhin umfasst:
einen dritten Schritt, wenn der Seitenabschnitt des Reifens einwärts gepresst wird, relativ zu dem Kernkörper mit einem Gummibein, in der Breitenrichtung des Reifens, so dass die pressende Kraft nur auf die Kunststoffbeine über dem Reifenseitenabschnitt wirkt, und einen Spalt zwischen dem Wulst und der Felge ebenso wie zwischen dem Gummibein und der Felge erzeugt; und
einen Gasfüllschritt zum Füllen von Gas in den Reifen durch den Spalt.

## Revendications

1. Système de montage de pneumatique, destiné à placer un pneumatique et un corps de noyau central sur une jante de roue, dans lequel le corps de noyau central est fixé dans le pneumatique et est doté de jambages en caoutchouc au niveau de ses extrémités dans la direction de la largeur et est agencé pour venir en butée contre le talon du pneumatique, le système de montage de pneumatique comprenant :
une pièce de support de roue, qui maintient une roue ;
un galet de pression qui est monté rotatif autour de l'axe de rotation de la roue et qui est maintenu par la pièce de support de roue servant de centre et qui appuie sur la surface extérieure du talon afin que la force n'agisse que sur les jambages en caoutchouc, par l'intermédiaire du talon du pneumatique ;
un galet d'expansion du talon qui assure un guidage et commande une déformation du talon et des jambages en caoutchouc de manière à ce que des parties du talon et des jambages en caoutchouc se positionnent sur le côté extérieur dans la direction diamétrale, par rapport à une joue de roue ;
**caractérisé par** une pièce d'immobilisation, destinée à immobiliser une partie circonférentielle de la surface extérieure du talon en direction du côté intérieur, dans la direction de la largeur du pneumatique, de manière à ce qu'une force soit exercée seulement sur les jambages en caoutchouc par l'intermédiaire du talon.

2. Système de montage de pneumatique selon la revendication 1, dans lequel la portion de la partie d'immobilisation qui entre en contact avec le talon est en forme d'arc de cercle.

3. Système de montage de pneumatique selon la revendication 1 ou 2, dans lequel :
la largeur de la portion de la partie d'immobilisation qui entre en contact avec le talon dans la direction radiale du pneumatique est de 10 à 40 mm et la longueur dans la direction circonférentielle est de 50 à 200 mm et est placée pendant l'immobilisation à une distance de 1 à 10 mm par rapport à la joue de la roue, dans la direction du côté extérieur dans la direction radiale du pneumatique ; et
le rayon du galet de pression est de 50 à 100 mm et la largeur de 10 à 40 mm et, pendant la pression, le galet de pression est placé à une distance de 1 à 10 mm par rapport à la joue de la roue, sur le côté extérieur, dans la direction radiale du pneumatique.

4. Système de montage de pneumatique selon l'une quelconque des revendications 1 à 3, dans lequel la partie d'immobilisation a une partie n'exerçant pas de contrainte, qui n'exerce pas de contrainte sur le pneumatique dans la direction du diamètre du pneumatique, lorsque la partie d'immobilisation est en contact avec le pneumatique.

5. Système de montage de pneumatique selon l'une quelconque des revendications 1 à 4, dans lequel le système ne possède qu'un seul galet de pression.

6. Système de montage de pneumatique selon l'une quelconque des revendications 1 à 4, dans lequel le système ne possède que deux galets de pression.

7. Système de montage de pneumatique selon l'une quelconque des revendications 1 à 6, comprenant en outre :
une partie de retenue de sécurité pour l'ensemble jante plus pneumatique, qui maintient le pneumatique et la roue où est fixé le corps de noyau central avec les jambages en caoutchouc ;
une partie de pression qui entre en contact avec un côté de la surface extérieure du pneumatique et qui presse la partie latérale du pneumatique vers le côté intérieur, dans la direction de la largeur du pneumatique, si bien que la force de pression, par rapport au corps de noyau central avec jambages en caoutchouc, n'agit que sur les jambages en caoutchouc par l'intermédiaire de la partie latérale du pneumatique et crée un espace entre le talon et la jante ainsi qu'entre les jambages en caoutchouc et la jante ; et
une partie de remplissage de gaz qui entre en contact avec la surface latérale extérieure du pneumatique et la jante afin de recouvrir l'espace à partir de la surface latérale extérieure du pneumatique, de maintenir une étanchéité à l'air et de remplir de gaz l'intérieur du pneumatique, par l'intermédiaire de l'espace.

8. Système de montage de pneumatique selon l'une quelconque des revendications 1 à 6, comprenant en outre :
une partie de retenue de sécurité pour l'ensemble jante plus pneumatique, qui maintient la roue où sont montés le pneumatique et le corps de noyau central avec les jambages en caoutchouc ;
une partie de pression qui presse sur un côté de la surface latérale extérieure du pneumatique et crée un espace entre le talon et la jante ainsi qu'entre les jambages en caoutchouc et la jante ; et
une partie de remplissage de gaz qui entre en contact avec la surface latérale extérieure du pneumatique et la jante afin de recouvrir l'espace à partir de la surface latérale extérieure du pneumatique, de maintenir une étanchéité à l'air et de remplir de gaz l'intérieur du pneumatique, par l'intermédiaire des espaces ;
dans lequel une portion de la partie de pression qui entre en contact avec le pneumatique a dans la direction radiale du pneumatique une largeur comprise entre 2 et 15 mm et, pendant la pression, est disposée à une distance de 1 à 20 mm de la joue de la roue, sur le côté extérieur, dans la direction radiale du pneumatique.

9. Système de montage de pneumatique selon la revendication 7 ou la revendication 8, dans lequel la portion de la partie de pression entrant en contact avec le pneumatique sert également de portion de la partie de remplissage de gaz entrant en contact avec le pneumatique.

10. Système de montage de pneumatique selon la revendication 7 ou la revendication 8, dans lequel la portion de la partie de pression entrant en contact avec le pneumatique et la portion de la partie de remplissage de gaz entrant en contact avec le pneumatique sont fournies indépendamment l'une de l'autre.

11. Procédé de montage de pneumatique, destiné à placer un pneumatique et un corps de noyau central sur une jante de roue, 1 dans lequel le corps de noyau central est fixé dans le pneumatique, est doté de jambages en caoutchouc au niveau de ses extrémités dans la direction de la largeur et est agencé pour venir en butée contre le talon du pneumatique, le procédé comprenant :
une première étape consistant à monter sur la jante un talon d'un côté du pneumatique et un jambage en caoutchouc d'un côté des jambages en caoutchouc du corps de noyau central ;
**caractérisé par** :
une deuxième étape, dans un état où une portion circonférentielle de la surface extérieure du talon de l'autre côté est immobilisée en direction du côté intérieur dans la direction de la largeur du pneumatique, consistant à presser le talon de l'autre côté dans la direction circonférentielle afin que la force de pression ne soit exercée que sur le jambage en caoutchouc de l'autre côté et que le talon et le jambage de caoutchouc de l'autre côté soient montés séquentiellement sur la jante tout en contrôlant à l'aide d'un galet d'expansion de talon afin que le talon et le corps de noyau central avec un jambage en caoutchouc soient positionnés sur la périphérie extérieure de la joue de la jante.

12. Procédé de montage de pneumatique selon la revendication 11, dans lequel le procédé comprend en outré :
une troisième étape dans laquelle la portion latérale du pneumatique est pressée vers l'intérieur, par rapport au corps de noyau central avec un jambage en caoutchouc, dans la direction de la largeur du pneumatique, afin que la force de pression n'agisse que sur les jambages en caoutchouc par l'intermédiaire de la portion latérale du pneumatique et crée un espace entre le talon et la jante ainsi qu'entre le jambage en caoutchouc et la jante ; et
une étape de remplissage en gaz afin de remplir le pneumatique de gaz par cet espace.
